# EUROPÄISCHE PATENTSCHRIFT

(11) **EP 0 434 915 B1**
(45) Veröffentlichungstag und Bekanntmachung des Hinweises auf die Patenterteilung: **16.02.1994**
(21) Anmeldenummer: 90119378.9
(22) Anmeldetag: 10.10.1990
(51) Int. Cl.: F16H 1/14, F16H 57/02

(54) **Doppelkegelradwinkelgetriebe**
Double angular bevel gearbox
Transmission angulaire double à engrenages coniques

(30) Priorität: 24.11.1989 DE 3938967
(43) Veröffentlichungstag der Anmeldung: 03.07.1991
(73) Patentinhaber: GKN Walterscheid GmbH, D-53797 Lohmar (DE)
(72) Erfinder: Flanhardt, Michael, W-5000 Köln 60 (DE); Roth, Andreas, W-5000 Köln 41 (DE); Nienhaus, Clemens, W-5204 Lohmar 1 (DE)
(74) Vertreter: Harwardt, Günther, Dipl.-Ing.

(56) Entgegenhaltungen:
- EP-A- 0 113 062
- EP-A- 0 124 462
- US-A- 1 402 580
- US-A- 2 306 958
- US-A- 2 817 407

## Beschreibung

Die Erfindung betrifft eine Baueinheit, bestehend aus zwei schwenkbeweglich über ein Schwenklager mit zwei beabstandeten Wälzlagern verbundenen Kegelradwinkelgetrieben, insbesondere für Antriebe in Landmaschinen, wobei je ein Kegelrad der beiden Kegelradwinkelgetriebe auf einer gemeinsamen Welle befestigt sind, welche zentral durch das Schwenklager hindurchverläuft und wobei das Schwenklager aus zwei koaxialen Hülsen mit angeformten Flanschen besteht, die an den Gehäusen der Kegelradwinkelgetriebe befestigt sind und die Wälzlager zwischen den Hülsen angeordnet sind.

Eine solche Baueinheit ist beispielsweise aus der EP 0 124 462 B1 bekannt. Bei dieser sind die beiden Kegelradwinkelgetriebe durch zwei Hülsen, die mit einer Gleitlagerung versehen sind, einandergegenüber abgestützt. Zur axialen Sicherung sind zusätzliche Maßnahmen zur Fixierung der beiden Teile einandergegenüber erforderlich. Um die Lagerung frei von Zugkräften zu halten, ist ein Bügel vorgesehen, der die äußere Lagerhülse umgibt, in dem diese schwenkbeweglich angeordnet ist. Desweiteren ist die Welle, die jeweils ein Kegelrad der beiden Kegelradwinkelgetriebe trägt zum einen unmittelbar im zugehörigen Getriebegehäuse und zum anderen über das zugeordnete Kegelrad in den Hülsen gelagert.

Eine solche Lagerung ist in Bezug auf Kräfte, die durch die Anhängung des Gerätes ausgeübt werden, zusätzlich beansprucht, so daß sich Verklemmungen ergeben können. Zum anderen erfordert die Lagerung über den zusätzlichen Bügel eine weitere Lagerstelle.

Der Erfindung liegt die Aufgabe zugrunde, eine Baueinheit bestehend aus zwei schwenkbar einandergegenüber gehaltenen Kegelradwinkelgetrieben zu schaffen, bei denen aus der Anhängung resultrierende Kräfte ohne Einfluß auf die Lagerung der Kegelräder sind und bei denen die Kräfte unmittelbar über die Gehäuse und das Schwenklager selbst aufgenommen werden, und wobei zusätzlich die Anlenkung für die Befestigung am Schlepper und am Gerät vereinfacht wird.

Diese Aufgabe wird erfindungsgemäß dadurch gelöst, daß die beiden Wälzlager als Kegelrollenlager ausgebildet sind und die Lager einander gegenüber an den Hülsen verspannt sind und daß die Welle, die die beiden Kegelräder aufweist, ebenfalls über Kegelrollenlager in den beiden Hülsen gelagert ist.

Von Vorteil bei diese Ausbildung ist, daß sämtliche Kräfte unmittelbar über die Gehäuse und das vorgesehene Schwenklager abgeleitet werden. Die Kegelrollenlager sorgen dafür, daß Zugkräfte, die sich aus der Anhängung ergeben, wirksam aufgenommen werden. Durch die unmittelbare Lagerung der Welle, die die Kegelräder trägt, die jeweils einem Kegelradwinkelgetriebe zugehörig sind, ebenfalls in den beiden Hülsen, wird verhindert, daß Zwängungen ausgeübt werden, die sich auf das Laufverhalten der beiden jeweils in Eingriff stehenden Kegelräder der beiden Kegelradwinkelgetriebe auswirken.

Von weiterem Vorteil ist, daß die Baueinheit vor allen Dingen aufgrund der Konstruktion für den Einsatz im Zusammenhang mit der Anhängung von landwirtschaften Geräten an einen Traktor begünstigt wird, wobei die gesamten Kräfte, die aus der Anhängung resultieren, vom Getriebe aufgenommen werden. Die Lagerung sorgt dafür, daß die Funktion der beiden gelenkig miteinander verbundenen Kegelradwinkelgetriebe durch Zugkräfte nicht gestört wird.

In weiterer Ausgestaltung ist vorgesehen, daß das jeweils weitere Kegelrad der beiden Kegelradwinkelgetriebe über Kegelrollenlager im Gehäuse gelagert ist, wobei die Lager beidseitig des Kegelrades angeordnet sind.

Hierdurch wird eine breite Abstützbasis für die Momente erreicht, die aus der Übertragung des Drehmomentes durch die Kegelräder resultieren.

Bei einer besonders günstigen Ausgestaltung ist vorgesehen, daß die beiden den Hülsen und/oder die der Welle zugeordneten Kegelrollenlager so angeordnet sind, daß die Stirnflächen mit den kleinen Rollendurchmessern der Kegelrollen einander zugewandt sind.

Hierdurch wird eine optimale Abstützung der beiden Hülsen bzw. der Welle in dem Schwenklager erzielt.

Vorzugsweise sind die den Hülsen zugeordneten Kegelrollenlager über Anschläge an der äußeren Hülse und der inneren Hülse sowie über eine auf die innere Hülse aufschraubbare Spannmutter gegeneinander verspannbar. Hierdurch kann das Schwenklager zusammen mit der Welle, welche die Kegelräder trägt, als Baueinheit vormontiert werden. Ferner ist es möglich, die für die Abstützung erforderliche Spielfreiheit zu erzielen, in dem die Spannmutter entsprechend angezogen wird.

Schließlich ist vorgesehen, daß von den Lagern, die die Welle tragen, eines in der äußeren Hülse und das andere in der inneren Hülse aufgenommen ist.

Ein bevorzugtes Ausführungsbeispiel der Erfindung ist in der Zeichnung schematisch dargestellt.

Es zeigt
- Figur 1: eine schematische Ansicht der Baueinheit mit dem daran angebrachten Lagerarm zum Anschluß an die Dreipunktanbauvorrichtung des Traktors,
- Figur 2: eine Seitenansicht zu Figur 1 und
- Figur 3: einen Schnitt durch die Baueinheit.

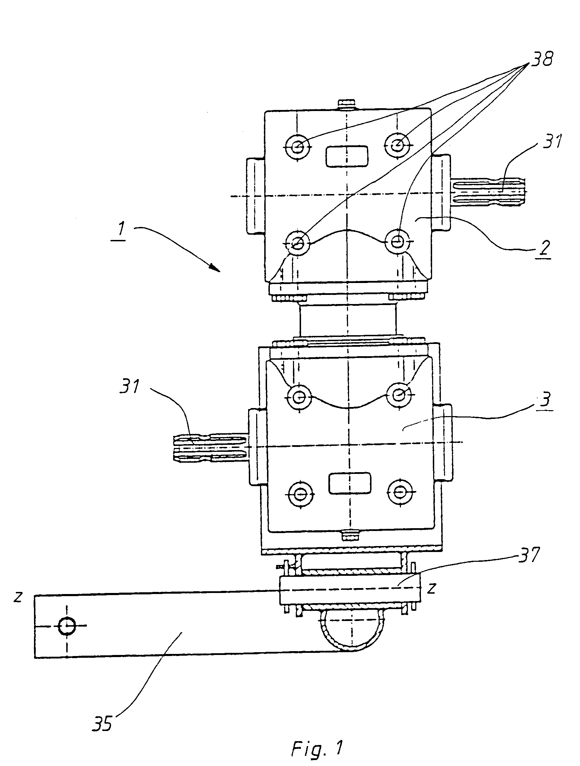

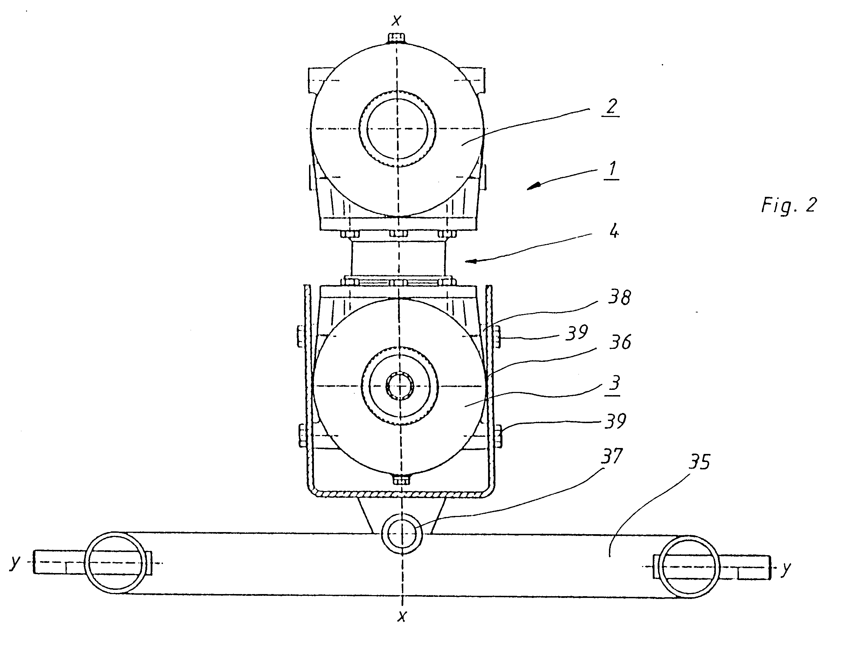

In den Figuren 1 und 2 ist das die Baueinheit bildende Doppelgetriebe 1 als Übersichtszeichnung dargestellt. Das Doppelgetriebe 1 umfaßt das obere Kegelradwinkelgetriebe 2 und das untere Kegelradwinkelgetriebe 3, welche beide über das Schwenklager 4 um die Achse X-X schwenkbeweglich miteinander verbunden sind. An das Gehäuse des unteren Kegelradwinkelgetriebe 3 sind über Anschlußnocken 38 und Schrauben 39 ein Lagerbügel 36 und an diesen über das Lager 37 der Lagerarm 35 angeschlossen. Der Lagerarm 35 dient zur Befestigung an den beiden Unterlenkern des Traktors. Die Anlenkung an den Unterlenker des Traktors erlaubt ein Schwenken der gesamten Baueinheit um die Achse X-X. Das Lager 37 erlaubt ein Verschwenken der Baueinheit 1 um eine Achse, die quer zur Achse Y-Y verläuft, nämlich die Achse Z-Z. Das Doppelgetriebe 1 selbst erlaubt ein Verschwenken des oberen Kegelradwinkelgetriebes 2 gegenüber dem unteren Kegelradwinkelgetriebe 3 um die Achse X-X. Damit ist eine Freiheit bezüglich der Beweglichkeit um drei Achsen gegeben. Das obere Kegelradwinkelgetriebe 2 ist über die Anschlußnocken 38 und in deren Gewindebohrung befestigte Schraubenbolzen an den Rahmen eines Gerätes, das vom Traktor anzutreiben ist, anschließbar. Die Befestigung des Lagerbügels 36 an dem unteren Kegelradwinkelgetriebe 3 erfolgt ebenfalls über die Nocken 38 und die Schrauben 39. Eine solche Art der Anlenkung ermöglicht eine große Abwinklung zwischen Traktor und dem anhängenden und vom Traktor anzutreibenden Gerät. Zum Antrieb ist ein Profilzapfen 31 vorgesehen, an den die Gelenkwelle anschließbar ist, die von der Zapfwelle des Traktors angetrieben wird. Der Antrieb des Gerätes ist über den Profilzapfen 31 ableitbar.

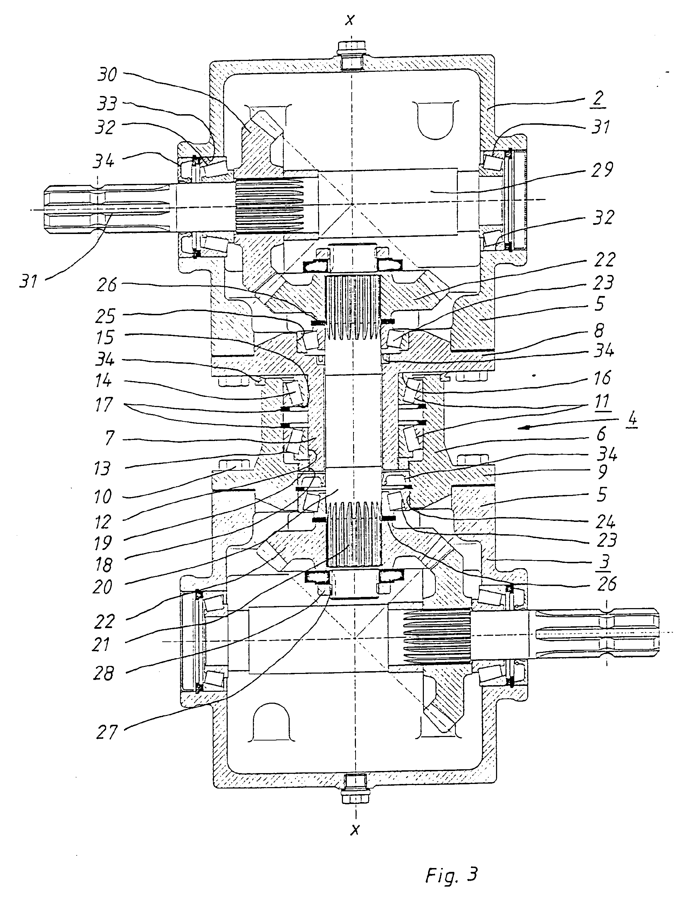

Der Aufbau der Baueinheit des Doppelgetriebes 1 ist aus der Figur 3 ersichtlich. Die beiden Kegelradwinkelgetriebe 2, 3 umfassen jeweils ein Gehäuse 5, welche über das Schwenklager 4 miteinander verbunden sind. Hierzu ist das Schwenklager mit einer äußeren Hülse 6 versehen, die einen angeformten Flansch besitzt, welcher über Schrauben 10 mit dem Gehäuse 5 des Kegelradwinkelgetriebes 3 fest verbunden ist.

Konzentrisch hierzu ist die innere Hülse 7 angeordnet, die ebenfalls einen Flansch 8 trägt, der über Schrauben 10 mit dem Gehäuse 5 des Kegelradwinkelgetriebes 2 fest verbunden ist. Die beiden Hülsen 6, 7 sind über Kegelrollenlager 11, die im Abstand entlang der Achse X-X zueinander angeordnet sind, einander gegenüber gelagert. Der Lageraußenring 13 der beiden Kegelrollenlager 11 stützt sich jeweils axial an einem Anschlagring 17 der äußeren Hülse 6 axial ab, während der eine Lagerinnenring 12 eines Kegelrollenlagers 11 an einer Schulter als Anschlag 16 an der äußeren Hülse 6 anliegt. Der Lagerinnenring 12 des anderen Kegelrollenlagers 11 stützt sich an einer Spannmutter 19 ab, die auf ein Gewinde 18 der inneren Hülse 7 aufschraubbar ist. Hierdurch ist das Schwenklager, bestehend aus den beiden Hülsen 6, 7 einander gegenüber fest verspannbar. Durch die relativ lange Ausbildung der Hülsen 6,7 ist auch eine erhebliche Steifigkeit gegen Verbiegung gewährleistet, d.h. gegen Zugkräfte, die auf die beiden Kegelradwinkelgetriebe 2, 3 in der Zeichenebene in entgegengesetzte Richtung ausgeübt werden.

Die innere Hülse 7 ist ebenfalls hohl ausgebildet. Durch sie erstreckt sich hindurch die Welle 20, auf der die beiden Kegelräder 22, welche jeweils einem der beiden Kegelradwinkelgetriebe 2 bzw. 3 angehören, befestigt sind. Die beiden Kegelrollenlager 23, die für die Lagerung vorgesehen sind, sind in Lagerbohrungen 24 der äußeren Hülse 6 bzw. 25 der inneren Hülse 7 aufgenommen und durch Sicherungsringe 26 in ihrer Lage auf der Welle 20, bzw. an entsprechenden Anschlagflächen der beiden Hülsen 6 ,7 im Bereich der Lagerbohrungen 24, 25 axial gesichert. Die beiden Enden der Welle 20 sind mit Verzahnungen 21 versehen, auf welchen die Kegelräder 22 drehfest aufgenommen sind. Die Kegelräder sind gegenüber der Welle durch auf deren Gewindeende 27 aufschraubbare Muttern 28 gesichert.

Die Kegelrollenlager 11 der beiden Hülsen 6, 7 und 23 zur Lagerung der Welle sind so angeordnet, daß die Stirnflächen der kleinen Durchmesser der Kegelrollen 14 einander zugewandt sind und die günstigste Abstützphase erreicht wird. Die jeweils andere Lagerwelle 29, auf der das zweite Kegelrad 30 der beiden Kegelradwinkelgetriebe 2, 3 angeordnet ist, sind in den Gehäusen 5 so aufgenommen, daß ein Kegelrollenlager jeweils beidseits des Kegelrades 30 in Lagerbohrungen 33 aufgenommen ist. Auch hierdurch ergibt sich eine große Abstützbasis zur Aufnahme der aus den Zahnkräften resultierenden Biegemomente.

Die den Lagerwellen 29 angeformten Profilzapfen 31 ragen aus dem Gehäusen 5 heraus und dienen jeweils dazu, den Antrieb bzw. an das anzutreibende Gerät angeschlossen zu werden. Zur Abdichtung des Schwenklagers 4 bzw. dessen Lager 11 und der Lager 23 der Welle 20 und der Lagerwelle 29 sind Dichtungen 34 vorgesehen.

## Patentansprüche

1. Baueinheit, bestehend aus zwei schwenkbeweglich über ein Schwenklager mit zwei beabstandeten Wälzlagern verbundenen Kegelradwinkelgetrieben, insbesondere für Antriebe in Landmaschinen, wobei je ein Kegelrad der beiden Kegelradwinkelgetriebe auf einer gemeinsamen Welle befestigt sind, welche zentral durch das Schwenklager hindurchverläuft und wobei das Schwenklager aus zwei koaxialen Hülsen mit angeformten Flanschen besteht, die an den Gehäusen der Kegelradwinkelgetriebe befestigt sind und die Wälzlager zwischen den Hülsen angeordnet sind,
dadurch gekennzeichnet,
daß die beiden Wälzlager als Kegelrollenlager (11) ausgebildet sind und die Lager (11) einander gegenüber an den Hülsen (6, 7) verspannt sind und daß die Welle (20), die die beiden Kegelräder (22) aufweist, ebenfalls über Kegelrollenlager (23) in den beiden Hülsen (6, 7) gelagert ist.

2. Baueinheit gemäß Anspruch 1,
dadurch gekennzeichnet,
daß das jeweils weitere Kegelrad (30) der beiden Kegelradwinkelgetriebe (2, 3) über Kegelrollenlager (32) im Gehäuse (5) gelagert ist, wobei die Lager (32) beidseitig des Kegelrades (30) angeordnet sind.

3. Baueinheit nach Anspruch 1,
dadurch gekennzeichnet,
daß die beiden den Hülsen (6, 7) und/oder die der Welle (20) zugeordneten Kegelrollenlager (11, 23) so angeordnet sind, daß die Stirnflächen (15) mit den kleinen Rollendurchmessern der Kegelrollen (14) einander zugewandt sind.

4. Baueinheit nach Anspruch 1,
dadurch gekennzeichnet,
daß die den Hülsen (6, 7) zugeordneten Kegelrollenlager (11) über Anschläge (16, 17) an der äußeren Hülse (6) und der inneren Hülse (7) sowie über eine auf die innere Hülse (6) aufschraubbare Spannmutter (19) verspannbar sind.

5. Baueinheit nach den Ansprüchen 1 und 3,
dadurch gekennzeichnet,
daß von den Lagern (23), die die Welle (20) tragen, eines in der äußeren Hülse (6) und das andere in der inneren Hülse (7) aufgenommen ist.

## Claims

1. A unit consisting of two angular bevel gear drives pivotably connected to one another by a pivot bearing with two spaced rolling contact bearings, especially for drives used in agricultural machinery, one bevel gear of each of the two angular bevel gear drives being secured on a common shaft extending centrally through the pivot bearing and the pivot bearing consisting of two coaxial sleeves with integral flanges attached to the housings of the angular bevel gear drives and the rolling contact bearings being arranged between the sleeves,
characterised in
that the two rolling contact bearings comprise bevel roller bearings (11), that the bearings (11) are loaded relative to one another at the sleeves (6, 7) and that the shaft (20) carrying the two bevel gears (22) is also supported in the two sleeves (6, 7) by means of bevel roller bearings (23).

2. A unit according to claim 1,
characterised in
that in each case the respective second bevel gear (30) of the two angular bevel gear drives (2, 3) is supported in the housing (5) by means of bevel roller bearings (32) arranged on either side of the bevel gear (30).

3. A unit according to claim 1,
characterised in
that the two sleeves (6, 7) and/or the bevel roller bearings (11, 23) associated with the shaft (20) are arranged such that the smaller roller diameter end faces (15) of the bevel rollers (14) are opposed to one another.

4. A unit according to claim 1,
characterised in
that the bevel roller bearings (11) associated with the sleeves (6, 7) are loaded by means of stops (16, 17) at the outer sleeve (6) and at the inner sleeve (7) and also by means of a tensioning nut (19) threaded on to the inner sleeve (6).

5. A unit according to claims 1 and 3,
characterised in
that of the bearings (23) supporting the shaft (20), one is received in the outer sleeve (6) and the other one in the inner sleeve (7).

## Revendications

1. Ensemble comprenant deux transmissions angulaires à engrenages coniques qui sont reliées à deux paliers à rouleaux écartés et qui sont capables de pivoter par l'intermédiaire d'un palier pivotant, en particulier pour des transmissions dans des machines agricoles, l'un des engrenages coniques des deux transmissions angulaires étant fixé sur un arbre commun qui traverse au centre le palier pivotant, et le palier pivotant comprenant deux fourreaux coaxiaux avec brides formées d'une seule pièce, qui sont fixées sur les boîtiers des transmissions angulaires et les paliers à rouleaux sont agencés entre les fourreaux,
caractérisé en ce que
les deux paliers à rouleaux sont réalisés sous la forme de paliers à rouleaux coniques (11), en ce que les paliers (11) sont mis sous tension l'un par rapport à l'autre contre les fourreaux (6, 7), et en ce que l'arbre (20) qui porte les deux engrenages coniques (22) est également monté dans les deux fourreaux (6, 7) par l'intermédiaire de paliers à rouleaux coniques (23).

2. Ensemble selon la revendication 1, caractérisé en ce que l'autre engrenage conique respectif (30) des deux transmissions angulaires à engrenages coniques (2, 3) est monté dans le boîtier (5) par l'intermédiaire de paliers à rouleaux coniques (32), les paliers (32) étant agencés des deux côtés de l'engrenage conique (30).

3. Ensemble selon la revendication 1, caractérisé en ce que les deux paliers à rouleaux coniques (11, 23) associés aux fourreaux (6, 16) et/ou à l'arbre (20) sont agencés de telle manière que les faces frontales (15) correspondant aux petits diamètres des rouleaux coniques (14) sont disposées face à face.

4. Ensemble selon la revendication 1, caractérisé en ce que les paliers à rouleaux coniques (11) associés aux fourreaux (6, 7) peuvent être mis sous tension par l'intermédiaire de butées (16, 17) sur le fourreau extérieur (6) et sur le fourreau intérieur (7), ainsi qu'au moyen d'un écrou de serrage (17) qui peut être vissé sur le fourreau intérieur (6).

5. Ensemble selon les revendications 1 et 3, caractérisé en ce que les paliers (23) qui portent l'arbre (20) sont reçus l'un dans le fourreau extérieur (6) et l'autre dans le fourreau intérieur (7).
